# EUROPÄISCHE PATENTANMELDUNG

(11) **EP 2 431 650 A1**
(43) Veröffentlichungstag der Anmeldung: **21.03.2012**
(21) Anmeldenummer: 10177746.4
(22) Anmeldetag: 20.09.2010
(51) Int. Cl.: F16P 3/14, F16P 7/02

(54) **Schutzsystem für Bediensicherheit an Maschinen, insbesondere Gesenkbiegepressen**

(71) Anmelder: Bystronic Laser AG, 3362 Niederönz (CH)
(72) Erfinder: Föllmer, Rainer, 99869, Goldbach (DE)
(74) Vertreter: Patentbüro Paul Rosenich AG

(57) **Zusammenfassung**

Die Erfindung betrifft ein Schutzsystem (2) für die Bediensicherheit an einer Maschine, insbesondere Gesenkbiegepresse (1), mit einem bewegbaren ersten Werkzeugteil (4), welches eine Arbeitsbewegung (15) in Richtung eines zweiten Werkzeugteils (7) zu einem Bearbeitungsvorgang an einem Werkstück (10) ausführt, und einem Steuersystem (9). Das Schutzsystem (2) hat eine primäre mitfahrende Schutzvorrichtung (17) zur Überwachung eines ersten Schutzbereiches (11) zwischen den Werkzeugteilen (4,7), welche dem bewegbaren ersten Werkzeugteil (4) verstellbar zugeordnet ist. Das Schutzsystem (2) steht mit der Steuersystem (9) der Maschine (1) in Verbindung. Das Wesen der Erfindung liegt darin, dass das Schutzsystem (2) mit einer sekundären Schutzvorrichtung (18) zum Überwachen und Eliminieren von Quetschungen zwischen dem sich bei der Bearbeitung bewegenden Werkstück (10) und dem bewegbaren ersten Werkzeugteil (4) und/oder dessen Wange (3) in einem zweiten Schutzbereich (33) versehen ist, welche mit dem Steuersystem (9) der Maschine (1) in Steuerverbindung steht. Vorzugsweise ist die primäre mitfahrende Schutzvorrichtung (17) automatisch verstellbar.

## Beschreibung

### GEBIET DER ERFINDUNG

Die vorliegende Erfindung betrifft ein Schutzsystem für die Bediensicherheit an einer Maschine, insbesondere Gesenkbiegepresse, um eine Verletzung von Bedienpersonen im Arbeitsablauf der Maschine zu verhindern.

### STAND DER TECHNIK

Wie bekannt, kommen die Gesenkbiegepressen meistens in der Metallblechumformung zum Einsatz. Die Gesenkbiegepressen besitzen meistens ein bewegliches Oberwerkzeug als bewegbares erstes Werkzeugteil und ein Unterwerkzeug als zweites Werkzeugteil, das zumeist ortsfest ist, sowie eine Schutzvorrichtung für die Bediensicherheit. Das zweite Werkzeugteil weist in der Regel eine Vertiefung in seinem Querschnittsprofil auf, so dass es eine "Matrize" bildet, in die das erste Werkzeugteil beim Biegeprozess eintauchen kann, um das Werkstück zu verformen. In einer Variante ist die "Matrize" auch an dem beweglichen Oberteil eingebaut.

Eine solche Sicherheitsvorrichtung ist z.B. aus der DE 10 2004 020 024 A1 bekannt. Diese Sicherheitsvorrichtung besitzt einen Lichtsender, der einen Lichtstrahl aussendet. Dieser Lichtstrahl beleuchtet einen Lichtempfänger. Der Lichtsender und der Lichtempfänger bilden zusammen eine Lichtschranke, die einen Schutzbereich an der unteren Kante eines Oberwerkzeugs als erstes Werkzeugteil überwacht. Diese Lichtschranke wird in der Arbeitsbewegung des ersten Werkzeugteils mitgeführt, um das gefährliche Eingreifen eines Gegenstandes (Werkzeug, Werkstückteil, Hand des Bedieners etc.) in den Arbeitsweg des ersten Werkzeugteils zu detektieren.

Sobald ein Eingriff in den Schutzbereich detektiert wird, erzeugt die mitfahrende Schutzvorrichtung Signale für die Pressesteuerung, die zum Abschalten der Gesenkbiegepresse führen. Mittels der vorgenannten Sicherheitsvorrichtung können ggf. auch Messwerte ermittelt werden, die auf einzelne Werkstück- oder Werkzeugbereiche bezogen sind. Diese Messwerte sollen anhand eines Schattenrisses bestimmt werden, die das Werkstück oder das Werkzeug auf den lichtempfindlichen Elementen (Bildpunkten) des Bildsensors erzeugt.

In der US 6,131,429 A ist ein weiteres Schutzsystem für Pressen beschrieben. Dieses Schutzsystem hat ein Tor, das an der bewegbaren Wange am ersten Werkzeugteil schwenkbar angeordnet ist und dem ein Sensor zugeordnet ist. Das Tor ist in seiner, das erste Werkzeugteil von unten abdeckenden, ersten Position, wenn das Werkzeug von dem zweiten Werkzeugteil ferner als ein vorgewählter Abstand ist, und es ist in seiner ausgekippten zweiten Position, wenn das Werkzeug von dem zweiten Werkzeugteil näher als der vorgewählte Abstand ist. Der Sensor wird elektrisch mit der Steuerung der Gesenkbiegepresse verbunden, um die Gesenkbiegepresse bei Gefahr abzustellen.

Die bekannten mitfahrenden Schutzvorrichtungen sind an den Maschinen so angeordnet, dass diese manuell oder elektrisch von Hand eingestellt werden können. Stand heute sind manuelle oder "halbautomatische" Systeme.

Diese Schutzvorrichtungen schützen jedoch direkt nur vor Quetschungen mit dem ersten Werkzeugteil.

Ein Nachteil der bekannten Schutzvorrichtungen ist zudem, dass sie bei jedem Wekzeugwechsel von dem Bediener wieder eingestellt werden müssen. Dies kann zu Fehleinstellungen führen, die bewusst oder unbewusst erfolgen, was aus dem Gesichtspunkt der Produktqualität nicht mehr annehmbar ist.

Ein weiterer Nachteil der zitierten Lösungen wird darin gesehen, dass sie gerade während der kritischsten Phase, d. h. während des eigentlichen Biegeprozesses nicht mehr aktiv sind. Nachweislich geschehen die meisten Quetschungs-Verletzungen durch das sich bewegende Blech und dem Werkzeug oder der Wange des beweglichen Werkzeugteils. Somit besteht weiterhin ein Interesse, um die Bediensicherheit an gattungsgemässen Maschinen in der Praxis zu verbessern.

### WESEN DER ERFINDUNG

Der Erfindung liegt die Aufgabe zugrunde, ein verbessertes Schutzsystem zu schaffen, durch welches einerseits die Bediensicherheit erhöht und auch die Verletzungen, insbesondere durch Quetschungen, durch das sich bewegende Blech und dem Werkzeug oder der Wange des bewegbaren Werkzeugteils eliminiert ist. Andererseits sind falsche Einstellungen durch die Bedienperson zu eliminieren.

Die gestellte Aufgabe wird durch die Merkmale des unabhängigen Anspruchs 1 gelöst. Vorteilhafte Weiterentwicklungen der erfindungsgemässen Lösung sind in den abhängigen Ansprüchen angegeben.

Die erfindungsgemässe Weiterentwicklung ging also von dem oben erörterten DE 10 2004 020 024 A1 aus, d. h. von einem Schutzsystem für Bediensicherheit an einer Maschine, mit einem ersten Werkzeugteil, welches eine Arbeitsbewegung in Richtung eines zweiten Werkzeugteils zu einem Bearbeitungsvorgang an einem Werkstück ausführt, und einem Steuersystem. Dabei hat das Schutzsystem eine primäre mitfahrende Schutzvorrichtung zur Überwachung eines ersten Schutzbereiches zwischen den Werkzeugteilen. Die primäre mitfahrende Schutzvorrichtung ist als eine Lichtschranke oder eine bildverarbeitende Einrichtung ausgebildet und dem bewegbaren ersten Werkzeugteil verstellbar zugeordnet. Das Schutzsystem steht mit dem Steuersystem der Maschine in Verbindung.

Das Wesen der Erfindung wird darin gesehen, dass das Schutzsystem mit einer sekundären Schutzvorrichtung zum Überwachen und Eliminieren von Quetschungen zwischen dem, sich bei der Bearbeitung bewegenden Werkstück und dem bewegbaren ersten Werkzeugteil und/oder dessen Wange in einem zweiten Schutzbereich versehen ist, welche mit dem Steuersystem der Maschine in Verbindung steht.

Bei einem bevorzugten Ausführungsbeispiel ist die sekundäre Schutzvorrichtung als eine, in dem vorbestimmten zweiten Schutzbereich am bewegbaren ersten Werkzeugteil und/oder an dessen Wange als schützendes Lichtgitter bildende Einheit ausgebildet.

Die sekundäre Schutzvorrichtung ist vorzugsweise an der Wange der Maschine in der Höhe verstellbar angeordnet.

Bei einem bevorzugten Ausführungsbeispiel ist die sekundäre Schutzvorrichtung zur Bildung des schützenden Lichtgitters im zweiten Schutzbereich mit mehreren Lichtsendern und Lichtempfängern versehen. Darüber hinaus ist das Schutzsystem mit der Sicherheitssteuerung verbunden, welche allein und/oder in Verbindung mit dem Steuersystem, vorzugsweise einer CNC-Steuerung, der Maschine vor und/oder während des Bearbeitens des Werkstückes auch für eine Simulation des Bearbeitungsvorganges geeignet ist, um festzustellen, ob dieser Vorgang zu einem Quetschen im zweiten Schutzbereich führen kann, und bei einer Gefahrsituation eine Warnung zu generieren.

Nach einem weiteren Merkmal der Erfindung ist die primäre mitfahrende Schutzvorrichtung mit einem eigenen Stellantrieb versehen, durch welchen sie nach jedem Werkzeugwechsel automatisch auf die vorgeschriebene Höhe verstellt bzw. eingestellt werden kann. Dazu ist der Stellantrieb mit dem Steuersystem, vorzugsweise mit einer CNC-Steuerung der Maschine und einer Messeinheit zur Bestimmung jeweiliger Position und der Sicherheitssteuerung verbunden.

Der Stellantrieb weist vorzugsweise ein Übertragungsmittel auf, das vorteilhaft mindestens eine, durch einen Motor angetriebene Spindel aufweist, welche mit einem Konsolarm durch bzw. über Gewinde verbunden ist. Der Konsolarm ist vorzugsweise an der Wange des bewegbaren ersten Werkzeugteils befestigt.

Die gestellte Aufgabe wird also erfindungsgemäss durch ein neues Schutzsystem gelöst, welches einerseits eine verbesserte, automatisch höhenverstellbare primäre mitfahrende Schutzvorrichtung für den ersten Schutzbereich und andererseits eine zusätzliche sekundäre Schutzvorrichtung zum Überwachen und Eliminieren von Quetschungen zwischen dem, sich bei der Bearbeitung bewegenden Werkstück und dem bewegbaren ersten Werkzeugteil und/oder dessen Wange in einem zweiten Schutzbereich aufweist.

Die vorliegende Erfindung hat im Wesentlichen die folgenden Effekte und Vorteile:
■ Bei der Anwendung der primären mitfahrenden Schutzvorrichtung werden zwei Achsen in der Steuerungseinheit definiert, die als Position die jeweilige Höhe des bewegbaren ersten Werkzeugteils ausgeben;
■ Diese Achsen sind praktisch so angeordnet, dass die mitfahrende primäre Schutzvorrichtung des Schutzsystems immer unter dem bewegbaren Werkzeugteils positioniert wird. Es ist kein Eingreifen des Bedieners mehr notwendig und damit werden individuelle Einstellungsfehler ausgeschlossen;
■ Mit der automatischen Verstellung der primären Schutzvorrichtung sind falsche manuelle Einstellungen unmöglich;
■ Um Quetschungen zwischen dem sich bei der Biegung bewegenden Blech und der Wange bzw. des Werkzeuges zu vermeiden, wird die spezielle sekundäre Schutzvorrichtung vorgeschlagen. Dabei kann eine Software z. B. der CNC-Steuerung die möglichen Quetschgefährdungen sogar im Voraus errechnen und nötigenfalls eine Warnung ausgeben. Dazu wird die sekundäre Schutzvorrichtung des Schutzsystems zu dem vorbestimmten Schutzbereich an der Wange bzw. am bewegbaren ersten Werkzeugteil vorgesehen;
■ Die Wange und/oder das bewegbare erste Werkzeugteil kann also mit der, auf die Maschinensteuerung einwirkenden sekundären Schutzvorrichtung ausgestattet sein, durch welche beim Eindringen eines Objektes (Blech oder Körperteil des Bedieners) der Hub der Gesenkbiegepresse sofort unterbrochen wird;
■ Die beiden Schutzvorrichtungen des vorgeschlagenen Schutzsystems sind vorzugsweise optisch bzw. opto-elektrisch;
■ Die sekundäre Schutzvorrichtung ist vorzugsweise an der Wange des bewegbaren ersten Werkzeugteils verstellbar aber fest angeordnet, oder wird an das bewegbare erste Werkzeugteil angepasst;
■ Die sekundäre Schutzvorrichtung ist vorzugsweise an der bewegbaren Wange montiert, wenn diese die Bewegung ausführt. Die sekundäre Schutzvorrichtung wird bei der Bewegung der entsprechenden Wange mitbewegt;

### KURZE BESCHREIBUNG DER ZEICHNUNG

Die Erfindung wird nachstehend anhand der beiliegenden Figuren eingehender erläutert, welche ein bevorzugtes Ausführungsbeispiel der erfindungsgemässen Lösung illustrieren. Es zeigt:
- Figur 1 eine schematische Vorderansicht einer Gesenkbiegepresse mit dem erfindungsgemässen Schutzsystem;
- Figur 2 ein vereinfachtes elektrisches Schaltungsschema des Schutzsystems nach Fig. 1;

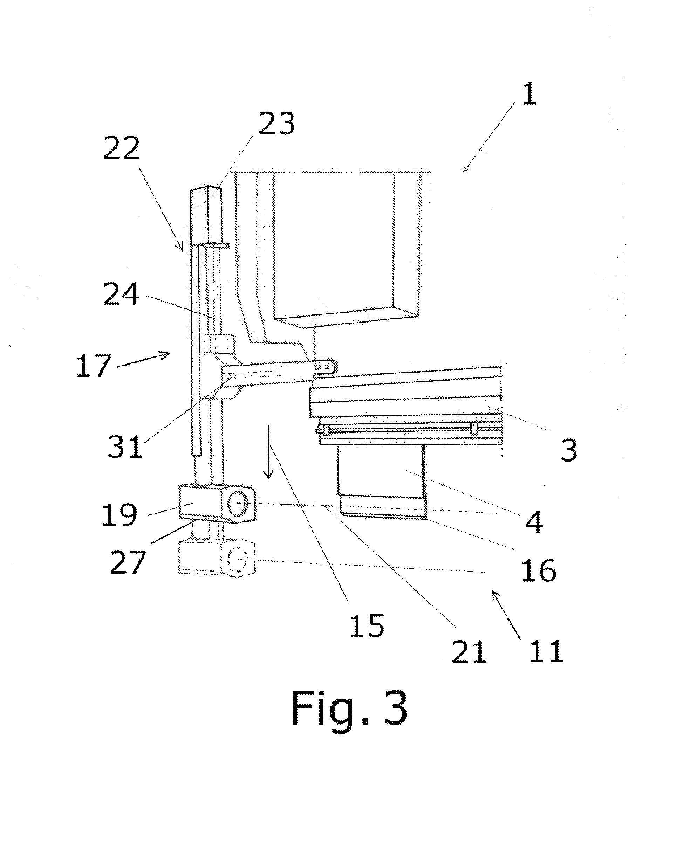

- Figur 3 ein Ausführungsbeispiel einer primären mitfahrenden Schutzvorrichtung des erfindungsgemässen Schutzsystems nach Fig. 1 im grösseren Massstab;
- Figur 4 ein Ausführungsbeispiel einer sekundären Schutzvorrichtung des erfindungsgemässen Schutzsystems nach Fig. 1 im grösseren Massstab.

### BESCHREIBUNG EINES AUSFÜHRUNGSBEISPIELES DER ERFINDUNG

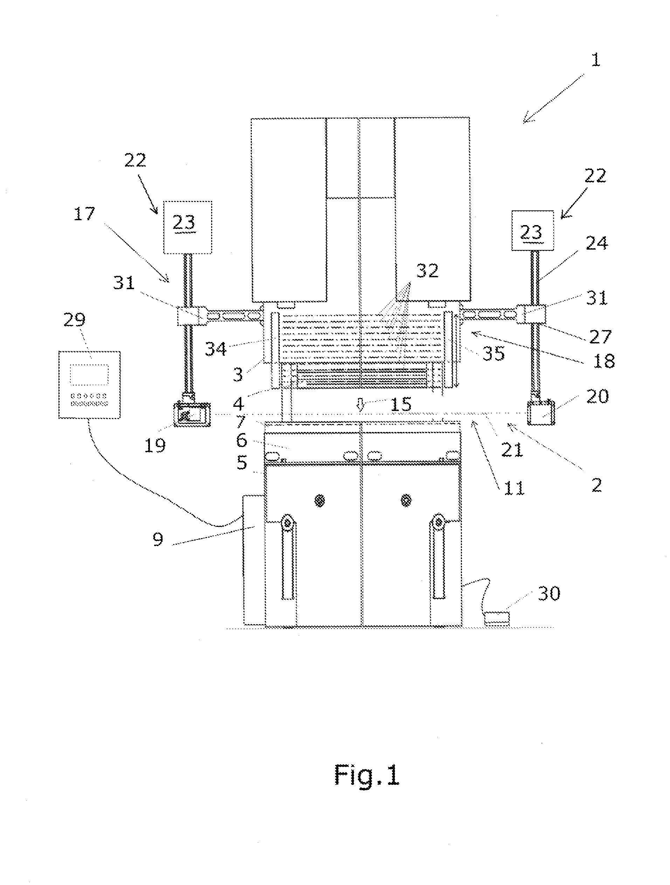

Fig. 1 illustriert eine hydraulische Gesenkbiegepresse 1, die mit einem Ausführungsbeispiel des erfindungsgemässen Schutzsystems 2 versehen ist, um eine Verletzung von Bedienpersonen im Arbeitsablauf der Gesenkbiegepresse 1 wirkungsvoll zu verhindern. Die Gesenkbiegepresse 1 hat eine vertikal bewegbare obere Wange 3, an welcher ein erstes Werkzeugteil 4 mitbewegbar befestigt ist. An einem Tisch 5 der Gesenkbiegepresse 1 ist eine untere Wange 6 befestigt, auf welcher ein Unterwerkzeug als zweites Werkzeugteil 7 angeordnet ist.

In diesem Ausführungsbeispiel ist die obere Wange 3 beweglich und die untere Wange 6 orstfest. In er alternativen hier nicht dargestellten Ausführungsform kann die obere Wange ortsfest und die untere Wange beweglich sein. In einer weiteren alternativen Ausführungsform sind beide Wangen relativ zueinander beweglich. In den nachfolgenden Ausführungen wird von einer bewegbaren oberen Wange und einer orstfesten unteren Wange ausgegangen. Für die alternativen Ausführungsformen gelten die nachfolgenden Ausführungen jedoch sinngemäss.

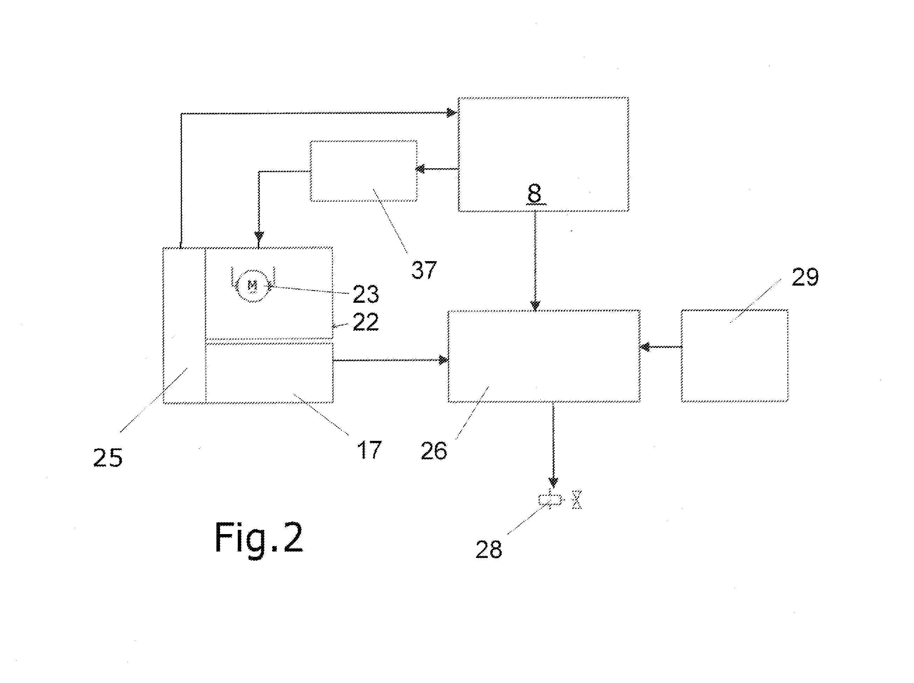

Zum gesteuerten Bewegen der oberen Wange 3 gegen die untere Wange 6 ist die Gesenkbiegepresse 1 hier mit einem Hydrauliksystem vorgesehen, welches eine Pumpe und mindestens ein Arbeitszylinder und dazu eine erste Steuerung, z. B. eine CNC-Steuerung 8, mit einem Rechner mit einer Speichereinheit aufweist, die eine Teileinheit eines Steuersystems 9 der Gesenkbiegepresse 1 bildet (Fig. 2).

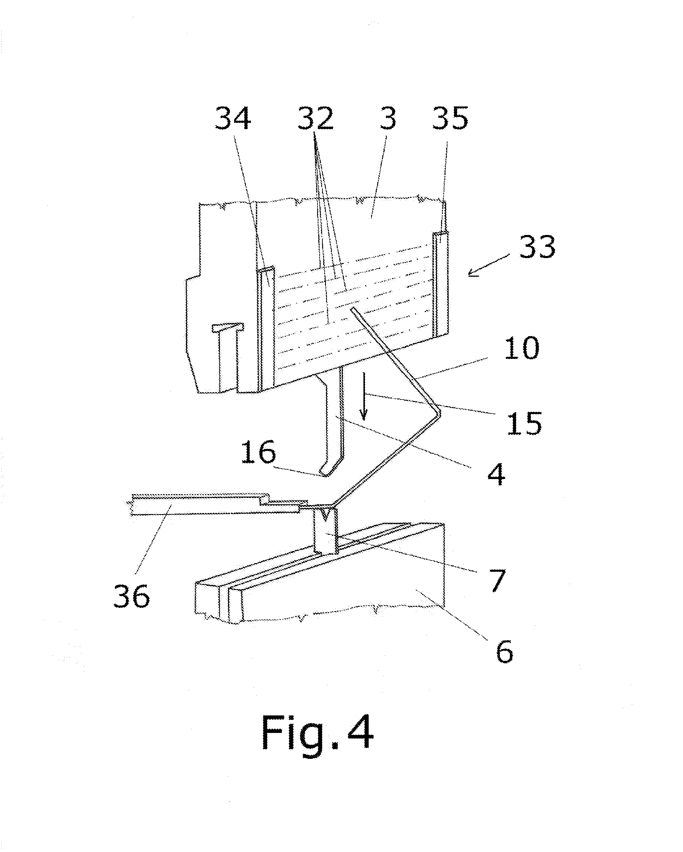

Die Gesenkbiegepresse 1 ist darüber hinaus mit einer zweiten Steuerung (nicht dargestellt) von Mitteln zum Abgriff der jeweiligen Position der oberen Wange 3 und von der oberen Wange 3 gegen ein, auf der unteren Wange 6 aufliegendes Werkstück 10 (Fig. 4) ausgeübten Kraft versehen. Die Pumpe des Hydrauliksystems wird durch einen elektrischen Antriebsmotor, vorzugsweise einen Drehstrommotor angetrieben. Die Arbeitsbewegung des Oberwerkzeugs als bewegbares erstes Werkzeugteil 4 ist in Fig. 1 mit einem Pfeil 15 bezeichnet.

Die Steuerung einer CNC-Presse erfolgt über den direkt in die Steuersystem 9 integrierten Computer, der mit Positions- und Zustands-Sensoren den IST-Zustand erfasst und nach Berechnung der Interpolation zum SOLL-Zustand aus dem CNC-Programm die Steuerung des Antriebsmotor und der anderen gesteuerten Maschinenelemente entsprechend regelt. Die CNC-Technik erlaubt eine automatisierte Bearbeitung mit mehreren gleichzeitig gesteuerten Achsen. (Dies ist näher in einer parallelen Patentanmeldung mit dem gleichen Anmeldetag und dem Aktenzeichen BYW029PEP der gleicher Anmelderin beschrieben).

Für jeden Bearbeitungsvorgang muss zunächst das zuvor bearbeitete Werkstück entnommen und das neu zu bearbeitende Werkstück in den Öffnungsspalt zwischen den Werkzeugteilen eingeführt werden. Dies erfolgt in der Regel manuell durch eine Bedienperson. Um während des Schliessens des Öffnungsspalts eine Verletzung, insbesondere der Hände der Bedienperson, durch eine gefährliche Bewegung eines Teils der Maschine zu vermeiden, überwacht eine Lichtschranke einen ersten Schutzbereich 11, der sich typischerweise unterhalb des bewegten ersten Werkzeugteils 4 erstreckt. Dieser vorbestimmte erste Schutzbereich 11 erstreckt sich entlang eines zweidimensionalen Querschnitts, so dass ein Sensor auf gefährliche Eingriffe aus verschiedenen Richtungen schnell und zuverlässig reagieren und ein Anhalten der gefährlichen Bewegung auslösen kann.

Das erste Werkzeugteil 4 hat eine vorlaufende Kante 16 (Fig. 4), die aufgrund der Arbeitsbewegung 15 eine Bewegungsebene definiert. Jeder Eingriff eines Objekts in die Bewegungsebene, wie ein Eingriff mit der Hand eines Bedieners, stellt eine Gefahrensituation dar, insbesondere wenn sich das erste Werkzeugteil 4 bereits dicht an das zweite Werkzeugteil 7 angenähert hat.

Das erfindungsgemässe Schutzsystem 2 dient einerseits dazu, solche Eingriffe im Bereich der Kante 16 im ersten Schutzbereich 11 zu detektieren, um in Abhängigkeit davon, d. h. bei Gefahrsituationen die Arbeitsbewegung der Gesenkbiegepresse 1 anzuhalten.

Es ist aber zu betonen, dass das vorgeschlagene Schutzsystem 2 nicht nur zur Bediensicherung von Gesenkbiegepressen verwendet werden kann, wie sie in Fig. 1 zu sehen ist. Das Schutzsystem 2 ist auch bei jeglichen anderen Maschinen (z.B. bei Schneidmaschinen, Stanzpressen, usw.) einsetzbar, bei denen zwei oder mehrere Maschineteile eine relativ zueinander gerichtete Arbeitsbewegung ausführen.

Das erfindungsgemässe Schutzsystem 2 besitzt beim dargestellten bevorzugten Ausführungsbeispiel eine primäre Schutzvorrichtung 17, die als eine mitfahrende Schutzvorrichtung im ersten Schutzbereich 11 ausgebildet ist, sowie eine sekundäre Schutzvorrichtung 18, die aber als ein Lichtgitter in einem zweiten Schutzbereich (nachstehend erörtert) aktiv ist.

Die primäre mitfahrende Schutzvorrichtung 17 hat einen Lichtsender 19 und einen Lichtempfänger 20, die in Fig. 1 rechts und links vom ersten Werkzeugteil 4 an der Gesenkbiegepresse 1 befestigt sind. Sie sind beide vorzugsweise mit dem ersten Werkzeugteil 4, bzw. mit dessen Wange 3 so verbunden, dass sie mit der Arbeitsbewegung des ersten Werkzeugteils 4 mitlaufen. Der Lichtsender 19 erzeugt dabei einen Lichtstrahl 21, der parallel zur vorlaufenden Kante 16 des ersten Werkzeugteils 4 verläuft und den Lichtempfänger 20 beleuchtet. So bilden der Lichtsender 19 und der Lichtempfänger 20 eine Lichtschranke, die eigentlich den ersten Schutzbereich 11 vor und um die Kante 16 des ersten Werkzeugteils 4 herum absichert.

Gegebenenfalls könnten dem mitfahrenden Lichtsender 19 mehrere, aufeinander ortfest angeordnete Lichtempfängern 20 zugeordnet sein. Auch eine solche Ausführung ist vorstellbar, bei welcher der fix angeordnete Lichtsender 19 ein Lichtband bzw. eine Lichtebene erzeugt, die parallel zu der Bewegungsebene liegt, wobei diesem Lichtsender 19 ein mitfahrender Lichtempfänger 20 zugeordnet ist.

Die primäre mitfahrende Schutzvorrichtung 17 übernimmt eigentlich den von der Norm geforderten Schutz zwischen den Werkzeugteilen. Sie wirkt vom oberen Totpunkt des bewegbaren ersten Werkzeugteils 4 (siehe Fig. 1) bis zu einem Punkt in Richtung der Arbeitbewegung (Pfeil 15) nach unten, bei welchem die Gesenkbiegepresse 1 in eine sichere Geschwindigkeit kleiner als oder gleich von 10 mm/s übergegangen ist. Die primäre mitfahrende Schutzvorrichtung 17 hat hier eine einzige Lichtschranke (Fig. 1). Gegebenenfalls weist die Schutzvorrichtung 17 mehrere Lichtschranken oder ein beispielsweise Kamera-basierendes optisches System auf.

Insbesondere bei einem Kamera-basierenden optischen System werden in der Steuerung, insbesondere in einer CNC- Steuerung 8, der Maschine bzw. der Gesenkbiegepresse 1 die erfassten Bilddaten der mitfahrenden Schutzvorrichtung mit den Positionen der die Schutzvorrichtung positionierenden Achsen und dem programmierten ersten Werkzeugteil verglichen. Damit kann erkannt werden, ob das richtige erste Werkzeugteil (Länge und Geometrie) eingesetzt wurde.

Ergibt die Prüfung, dass das Werkzeug den Erwartungen entspricht, erfolgt die Bestätigung automatisch. Werden in der Prüfung Unstimmigkeiten entdeckt, wird der Bediener aufgefordert die Werkzeugwahl zu überprüfen.

Dieselbe Prozedur kann bei dem ersten Hub nach einem Werkzeugwechsel gestartet werden. Als Signal werden beispielsweise die Signale der Werkzeugklemmung ausgewertet. Dabei wird das zweite Werkzeugteil durch die mitfahrende Schutzvorrichtung bildlich erfasst und an die Steuerung, vorteilhaft die CNC- Steuerung übergeben. Die Bilddaten werden mit der Position der oberen Wange, der Position der mitfahrenden Schutzvorrichtung und dem programmierten zweiten Werkzeugteil verglichen. Dabei kann die Höhe und die Geometrie des zweiten Werkzeugteils überprüft werden. Ist das zweite Werkzeugteil nicht das erwartete, wird der Hub unterbrochen und der Bediener in einem Dialog aufgefordert, das Werkzeug zu bestätigen oder zu korrigieren.

Im Sinne der vorliegenden Erfindung wird die mitfahrende primäre Schutzvorrichtung 17 automatisch auf die vorbestimmte richtige Höhe eingestellt. Vorzugsweise ist die automatische Einstellung durch eine, vorteilhaft in der CNC-Steuerung der Maschine gespeicherte Werkzeughöhe bestimmt. Dazu wird die mitfahrende primäre Schutzvorrichtung 17 mit einem eigenen Stellantrieb 22 versehen, der einen Motor 23 mit einer Spindel 24 umfasst. Die primäre Schutzvorrichtung 17 ist ferner mit einer Messeinheit 25 (Fig.2) versehen. Dadurch kann die relative Lage der Lichtschranke der primären Schutzvorrichtung 17 zum ersten Werkzeugteil 4 jeweils im Kenntnis des gerade eingebauten Werkzeuges (auf einen vorzugsweise vorbestimmten und gespeicherten Sollwert) vertikal automatisch verstellt, d. h. orientiert, werden. Dies erfolgt normalerweise während der Einstellungsphase der Gesenkbiegepresse 1.

Wenn also das erste Werkzeugteil 4 gewechselt wird, verstellt dann die mitfahrende primäre Schutzvorrichtung 17 automatisch die gegenseitige Stellung der Schutzvorrichtung entsprechend.

Das erfindungsgemässe Schutzsystem 2 weist auch eine Sicherheitssteuerung 26 (siehe Fig. 2) auf. Die eigentliche Steuerung erfolgt durch zwei Achsen, die entsprechend den vorprogrammierten Werkstücken 10 die Höhe des ersten Werkzeugteils 4 als Position ausgeben. Diese Achsen sind derart angeordnet, dass die mitfahrende Schutzvorrichtung 17 immer unter dem bewegbaren ersten Werkzeugteil 4 im ersten Schutzbereich 11 positioniert wird. Es ist kein Eingreifen des Maschinenbedieners mehr notwendig, sodass individuelle Fehler ausgeschlossen werden.

Die Messeinheit 25 der mitfahrenden primären Schutzvorrichtung 17 meldet die wirkliche Position des ersten Werkzeugteils 4 an die Sicherheitssteuerung 26 des Schutzsystems 2.

Die automatische Verstellbewegung der mitfahrenden primären Schutzvorrichtung 17 wird also mit dem Stellantrieb 22 (oder einem anderen mechanischen System) durch die Spindel 24 und ein Innengewinde 27 eines Arms ausgeführt. Bei der dargestellten Ausführung ist der einen, in Fig. 1 links angeordneten Spindel 24 der Lichtsender 19 und der anderen, in Fig. 1 rechts angeordneten Spindel 24' der Lichtempfänger 20 zugeordnet. Jede Spindel 24 ist an ihrem einen Ende mit je einem Konsolarm 31 durch die Innengewinde 27 und darin drehbar, an ihrem anderen Ende mit der bewegbaren Wange 3 oder dem ersten Werkzeugteil 4 fest verbunden.

Vorzugsweise gehört zum Schutzsystem 2 auch eine Auswerteeinheit (nicht dargestellt), die ggf. separat von dem Lichtsender 19 und dem Lichtempfänger 20 angeordnet oder mindestens teilweise in dem Lichtsender 19 und/oder im Lichtempfänger 20 integriert sein kann. Diese Auswerteeinheit hat die Aufgabe, den Lichtsender 19 nötigenfalls anzusteuern und die mit dem Lichtempfänger 20 aufgenommenen Bilder auszuwerten, um in Abhängigkeit davon die Arbeitsbewegung des ersten Werkzeugteils 4 anzuhalten. Die Auswerteeinheit ermöglicht ggf. auch, die Position und die Abmessungen von einzelnen Werkstück- oder Werkzeugbereichen zu vermessen.

Die mitfahrende primäre Schutzvorrichtung 17 ist also so einzustellen, dass ihre Strahlen oder das Bild bauartbedingt immer unter dem bewegbaren ersten Werkzeugteil 4 angeordnet sind. Wenn sich die Wange 3 des ersten Werkzeugteils 4 bewegt, bewegt sich die mitfahrende Schutzvorrichtung 17 regelmässig nicht selbständig. Diese ist dann fest mit der Wange 3 verbunden und bewegt sich bei der illustrierten Ausführung mit dieser zusammen.

Wird der erste Schutzbereich 11 unter dem ersten Werkzeugteil 4 unterbrochen, wird die Gesenkbiegepresse 1 durch die Sicherheitssteuerung 26 und ein Sicherheitsventil 28 gestoppt (Fig. 2). In den Figuren 1 und 2 sind ein bekanntes Bediengerät der Gesenkbiegepresse mit 29 und ein Fusspedal mit 30 bezeichnet.

Es ist aus der vorgenannten Offenbarung deutlich, dass die mitfahrende primäre Schutzvorrichtung 17 beim Erreichen des Bereiches des Werkstückes 13 (des Bleches) deaktiviert wird. Alle in der Norm geforderten Schutzmassnahmen enden, wenn das Blech gebogen wird, was technologisch so begründet ist.

Bei der Anwendung der automatisch einstellbaren mitfahrenden primären Schutzvorrichtung 17 des erfindungsgemässen Schutzsystems 2 sind individuelle manuelle Fehler ausgeschlossen. Dies bedeutet, dass damit falsche Einstellungen praktisch unmöglich sind. Dadurch kann die Produktqualität bedeutend erhöht werden.

Da die Wange 3 und/oder das erste Werkzeugteil 4 mit der, auf die Maschinensteuerung einwirkenden mitfahrenden primären Schutzvorrichtung 17 ausgestattet ist, wird beim Eindringen eines Objektes (Blech oder Körperteil des Bedieners) der Hub der Gesenkbiegepresse 1 sofort unterbrochen.

Die mitfahrende primäre Schutzvorrichtung 17 ist vorzugsweise optisch und an der bewegbaren Wange 3 automatisch verstellbar angeordnet, oder wird an das erste Werkzeugteil 4 angepasst.

Darüber hinaus ist sinngemäss auch eine solche Ausführung möglich, bei der die automatisch verstellbare primäre Schutzvorrichtung 17 bei der Bewegung der Wange 3 des ersten Werkzeugteils 4 und/oder der Wange 6 des zweiten Werkzeugteils 7 mitbewegt wird.

Ein weiterer Aspekt der Erfindung wird darin gesehen, dass beim vorgeschlagenen Schutzsystem 2 die zuvor schon erwähnte sekundäre Schutzvorrichtung 18 und dadurch ein schützendes Lichtgitter 32 vorgesehen ist, um Quetschungen zwischen sich bei der Biegung bewegenden Bleches und der Wange 3 bzw. des ersten Werkzeugteils 4 in einem zweiten Schutzbereich 33 der Gesenkbiegepresse 1 zu vermeiden. Nach unseren Erfahrungen geschehen die meisten Quetschung-Verletzungen durch das sich bewegende Werkstück/Blech 13 und dem bewegbaren ersten Werkzeugteil 4 oder dessen Wange 3 während der Bearbeitung, wobei die primäre Schutzvorrichtung 17 nicht mehr aktiv ist.

Die Einzelheiten der sekundären Schutzvorrichtung 18 des Schutzsystems 2 sind in den Figuren 1 und 4 zu sehen. Durch die sekundäre Schutzvorrichtung 18 wird nach der Erfindung das schützende Lichtgitter 32, ggf. als eine Serie von einzelnen Lichtstrahlen, in dem vorbestimmten zweiten Schutzbereich 33 an der Wange 3 oder dem ersten Werkzeugteil 4 gesichert. Dazu ist die sekundäre Schutzvorrichtung 18 in diesem Falle mit je einer Serie von übereinander angeordneten Lichtsender 34 und Lichtempfängern 35 versehen. Durch solche Anordnung des Lichtgitters 32 auf der Wange 3 bzw. auf dem ersten Werkzeugteil 4 wird also das Lichtgitter 32 so eingestellt, dass beim Biegen das sich biegende Werkstück 10 (in der Fig. 4 das obere Ende des Bleches) in das Lichtgitter 32 eindringt.

Während des normalen Betriebs der Gesenkbiegepresse 1, d. h. bei der Biegung eines Bleches, oder schon in der Vorbereitungsphase, werden im Sinne der Erfindung jeweils die möglichen Quetschgefährdungen zwischen dem sich bewegenden Bleches und der Wange 3 oder dem ersten Werkzeugteil 4 während der Bearbeitung durch das Computer (mittels Software) bei jedem Werksstück 10 berechnet, um Quetschungen zwischen dem Blech und der Wange und/oder Werkzeug zu vermeiden. Bei einer Gefahrsituation werden Warnungen generiert und die Gesenkbiegepresse 1 wird durch die Sicherheitssteuerung 26 und das Sicherheitsventil 28 (siehe Fig. 2) sofort abgestellt.

Durch die Berechnung der Steuerung, die bei der Simulation im Voraus feststellt, dass es bei dieser Biegung zu einem Quetschen kommen kann, wird also durch die Sicherheitssteuerung 26 eine Warnung generiert, die durch den Bediener quittiert werden muss.

Kommt es nun zu einer Unterbrechung des Lichtgitters 32 während des Bearbeitung des Werkstückes 10 wird die Gesenkbiegepresse 1 gestoppt. Dann kann der Bediener seine Hand aus dem Gefahrenbereich bzw. zweiten Schutzbereich 33 nehmen. Ein nochmaliges Betätigen des Bediengerätes 29 bzw. des Fusspedals 30 setzt danach die zuvor unterbrochene Biegung fort.

Bei einer Gefahrsituation wird ein Warnsignal vom Schutzsystem 2 ausgegeben, das vom Bediener bestätigt werden muss. Es ist in der Praxis so, dass viele Werkstücke der Wange 3 des ersten Werkzeugteils 4 sehr nahe kommen oder sich sogar an dieser anlegen. Ohne die vorgenannte Massnahme, d. h. ohne die sekundäre Schutzvorrichtung 18 wären diese Teile kaum herstellbar.

Es ist zu betonen, dass die sekundäre Schutzvorrichtung 18 des Schutzsystems 2 und deren Lichtgitter 32 während des Biegens aktiv ist und nicht verstellt wird. Sie ist bei der illustrierten Ausführungsform (siehe Fig. 4) an der Wange 3 des ersten Werkzeugteils 4 fest angeordnet, und wird zu Beginn in der Höhe justiert (ggf. manuell, z. B. über Schrauben und Langlöcher, oder durch einen Stellantrieb), wenn das zu bearbeitende Werkstück 10 eingerichtet wird.

In Fig. 4 ist eine, das Werkstück von hinten stützende Stützbrücke mit 36 bezeichnet. In Fig. 2 ist zwischen der CNC-Steuerung 8 und dem Stellantrieb 22 ein Verstärker 37 eingefügt.

Die sekundäre Schutzvorrichtung 18 mit ihrem Lichtgitter 32 ist selbstverständlich nicht an der mitfahrenden primären Schutzvorrichtung 17 nach Fig. 1 gebunden. Dieses Lichtgitter 32 kann ggf. auch mit anderen Schutzvorrichtungen kombiniert werden, wie z. B. einem, vor der Biegelinie des Werkstückes 10 angeordneten anderen Lichtgitter oder Lichtschranke.

Die Erfindung ist selbstverständlich nicht auf das beschriebene Ausführungsbeispiel beschränkt. Auch weitere Ausführungsformen und Kombinationen sind denkbar innerhalb des beanspruchten Schutzumfanges aufgrund der obigen Offenbarung.

### LISTE DER BEZUGSZEICHEN:

- 1 -: Gesenkbiegepresse
- 2 -: Schutzsystem
- 3 -: obere Wange
- 4 -: 1. Werkzeugteil / Oberwerkzeug
- 5 -: Tisch
- 6 -: untere Wange
- 7 -: 2. Werkzeugteil / Unterwerkzeug
- 8 -: CNC-Steuerung
- 9 -: Steuersystem
- 10 -: Werkstück
- 11 -: Erster Schutzbereich
- 12-: -
- 13-: -
- 14-: -
- 15 -: Pfeil (Arbeitsbewegung)
- 16 -: Kante des Oberwerkzeuges
- 17 -: Primäre mitfahrende Schutzvorrichtung
- 18 -: Sekundäre Schutzvorrichtung
- 19 -: Lichtsender
- 20 -: Lichtempfänger
- 21 -: Lichtstrahl
- 22 -: Stellantrieb
- 23 -: Motor
- 24 -: Spindel
- 25 -: Messeinheit
- 26 -: Sicherheitssteuerung
- 27 -: Innengewinde

- 28 -: Sicherheitsventil
- 29 -: Bediengerät
- 30 -: Fusspedal
- 31 -: Konsolarm
- 32 -: Lichtgitter
- 33 -: Zweiter Schutzbereich
- 34 -: Lichtsender
- 35 -: Lichtempfänger
- 36 -: Stützbrücke
- 37 -: Verstärker

## Patentansprüche

1. Schutzsystem für die Bediensicherheit an einer Maschine, insbesondere Gesenkbiegepresse (1), mit einem bewegbaren ersten Werkzeugteil (4), welches eine Arbeitsbewegung (15) in Richtung eines zweiten, vorzugsweise ortsfesten, Werkzeugteils (7) zu einem Bearbeitungsvorgang an einem Werkstück (10) ausführt, und einem Steuersystem (9), wobei das Schutzsystem (2) eine primäre mitfahrende Schutzvorrichtung (17) zur Überwachung eines ersten Schutzbereiches (11) zwischen den Werkzeugteilen (4,7) umfasst, welche dem bewegbaren ersten Werkzeugteil (4) verstellbar zugeordnet ist, und dass das Schutzsystem (2) mit der Steuersystem (9) der Maschine in Verbindung steht, **dadurch gekennzeichnet, dass** das Schutzsystem (2) mit einer sekundären Schutzvorrichtung (18) zum Überwachen und Eliminieren von Quetschungen zwischen dem sich bei der Bearbeitung bewegenden Werkstück (10) und dem bewegbaren ersten Werkzeugteil (4) und/oder dessen Wange (3) in einem zweiten Schutzbereich (33) versehen ist, welche mit dem Steuersystem (9) der Maschine (1) in Steuerverbindung steht.

2. Das Schutzsystem nach Anspruch 1, **dadurch gekennzeichnet, dass** die sekundäre Schutzvorrichtung (18) als eine, in dem vorbestimmten zweiten Schutzbereich (33) am bewegbaren ersten Werkzeugteil (4) und/oder an dessen Wange (3) einen schützenden Lichtgitter (32) bildende Einheit ausgebildet ist.

3. Das Schutzsystem nach Anspruch 1 oder 2, **dadurch gekennzeichnet, dass** die sekundäre Schutzvorrichtung (18) an der Wange (3) der Maschine (1) höhenverstellbar angeordnet ist.

4. Das Schutzsystem nach einem der Ansprüche 1 bis 3, **dadurch gekennzeichnet, dass** die sekundäre Schutzvorrichtung (18) zur Bildung des schützenden Lichtgitters (32) im zweiten Schutzbereich (33) mit mehreren Lichtsendern (34) und Lichtempfängern (35) versehen ist.

5. Das Schutzsystem nach einem der Ansprüche 1 bis 4, **dadurch gekennzeichnet, dass** das Schutzsystem (2) eine Sicherheitssteuerung (26) hat, welche allein und/oder in Verbindung mit dem Steuersystem (9), vorzugsweise CNC-Steuerung (8) der Maschine (1) vor und/oder während des Bearbeitens des Werkstückes (10) für eine Simulation des Bearbeitungsvorganges geeignet ist, um festzustellen, ob er zu einem Quetschen im zweiten Schutzbereich (33) führen kann und bei einer Gefahrsituation eine Warnung generiert.

6. Das Schutzsystem nach einem der Ansprüche 1 bis 5, **dadurch gekennzeichnet, dass** die primäre mitfahrende Schutzvorrichtung (17) mit einem Stellantrieb (22) versehen ist, durch welchen sie nach jedem Werkzeugwechsel automatisch auf die vorgeschriebene Höhe verstellt, bzw. eingestellt ist, wozu der Stellantrieb (22) mit dem Steuersystem (9), vorzugsweise mit der CNC-Steuerung (27), der Maschine (1) und einer Messeinheit (24) zur Bestimmung jeweiliger Position und der Sicherheitssteuerung (26) verbunden ist.

7. Das Schutzsystem nach Anspruch 6, **dadurch gekennzeichnet, dass** der Stellantrieb (22) Übertragungsmittel aufweist.

8. Das Schutzsystem nach Anspruch 7, **dadurch gekennzeichnet, dass** das Übertragungsmittel mindestens eine, durch einen Motor (23) angetriebene Spindel (24) aufweist, welche mit einem Konsolarm (31) über Gewinde verbunden ist, wobei der Konsolarm (31) vorzugsweise an der Wange (3) befestigt ist.
